# EUROPEAN PATENT APPLICATION

(11) **EP 2 445 047 A2**
(43) Date of publication of application: **25.04.2012**
(21) Application number: 10789711.8
(22) Date of filing: 16.06.2010
(51) Int. Cl.: H01M 10/00

(54) **INSTRUMENT CONNECTION TYPE UNIT PACK COMBINED CELL CARTRIDGE**

(30) Priority: 17.06.2009 KR 20090054070
(71) Applicant: Megabess Inc., Seoul 153-803 (KR); Kang, Jeong Wook, Yangcheon-gu, Seoul 158-070 (KR)
(72) Inventor: KANG, Jeong Wook, Seoul 158-070 (KR); LEE, Chan Gee, Seoul 122-940 (KR); JANG, Yong Ho, Anyang-si Gyeonggi-do 431-736 (KR); KIM, Ha Young, Seoul 152-800 (KR)
(74) Representative: Charrier, Rapp & Liebau
(86) International application number: PCT/KR2010/003872
(87) International publication number: WO 2010/147384

(57) **Abstract**

The present invention relates to an instrument connection type unit pack combined cell cartridge assembled into a compound cell interconnection mesh, and to a combined cartridge electricity storage device assembled into a compound unit interconnection mesh in which a plurality of cell cartridges are electrically interconnected. The unit pack combined cell cartridge of the present invention is configured such that a plurality of cells are interconnected into a unit pack using a suitable device (bus bar), and a plurality of unit packs are interconnected into a unitary cartridge using a suitable device (intermediate conductor plate). The combined cartridge electricity storage device of the present invention is configured such that a plurality of unit pack combined cartridges are accommodated in an outer case and interconnected into a serial or parallel compound interconnection structure to form a unitary system. The present invention interconnects cells, unit packs and cartridges using an easily connectible or separable instrument, to thereby allow for ease of assembly and improve productivity. In addition, the number of cells used in a unit pack, the number of unit packs used in a cartridge, and the number of cartridges used in an electricity storage device can be adjusted and changed to change current capacity and voltage capacity with ease.

## Description

### [Technical Field]

The present invention relates to a cell cartridge and, more particularly, to a cell cartridge in which a plurality of unit cells are assembled and modularized in a case.

### [Background Art]

A conventional lithium ion cell pack as an example of a storage battery (i.e., secondary battery) for storing electrical energy and supplying the electrical energy to a load will be briefly described below. First, a plurality of lithium ion cells capable of charging and discharging are combined into a unit module, a plurality of unit modules are combined into a larger module, and a plurality of larger modules are combined into a much larger module, thereby manufacturing a battery pack having a desired capacity.

In this case, cells having a circular cross-section (i.e., cylindrical cells) or cells having a square cross-section are bound together with glass tape, for example, to form a unit module and a plurality of unit modules are combined appropriately with glass tape, thereby manufacturing a battery pack.

For example, when manufacturing a battery pack including seven rows of cells connected in series and fourteen rows of cells connected in parallel, a process of binding seven cells with glass tape is performed fourteen times to form a total of fourteen unit modules, each two unit modules are bound together with glass tape to form a total of seven larger modules, each two larger modules are bound together with glass tape to form a total of three much larger modules, and these three modules are bound to the remaining one module, thereby manufacturing a battery pack including a total of 98 cells.

However, such a manufacturing process requires a lot of time and may produce a number of defects. Moreover, the manual process may lead to inaccuracies in the manufacturing standards for the battery packs.

Especially, since the cells are in direct contact with each other, there is no sufficient shock absorption between the cells, and the heat generated is transferred to each other during discharge to cause interaction between the cells, which results in a significant reduction in operating efficiency, thereby reducing the lifespan of the battery.

Moreover, in the case where the cells are simply bound together with glass tape, a contact failure (i.e., a reduction in contact area) or excessive contact resistance between cell terminals (i.e., electrodes) and external terminals may occur due to position errors between the cells bound together with the glass tape.

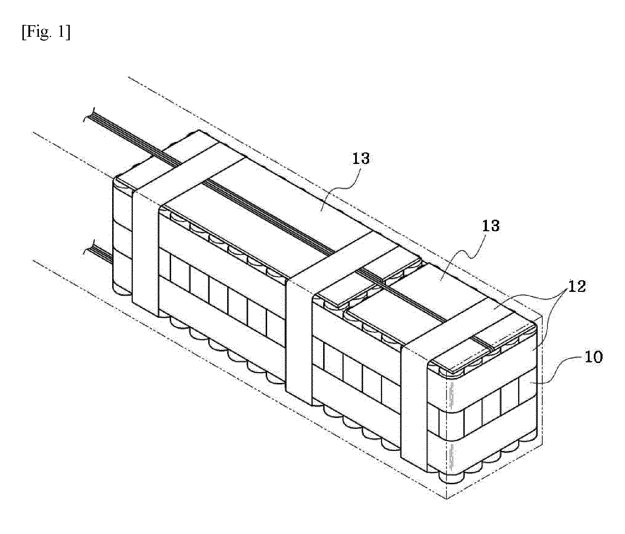

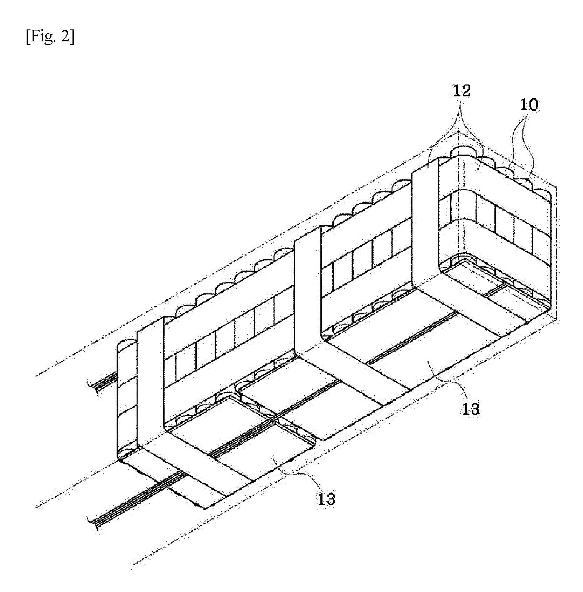

Furthermore, for the application of series and parallel interconnection between unit cells, as shown in FIGS. 1 and 2, in the case where terminals (i.e., electrodes) of cells 10 and connection plates 13 (for electrically connecting the cells to each other, typically nickel plate conductors) are welded together, a number of welding defects with the connection plates 13 may occur due to position errors between the cells bound together with glass tape 12. Moreover, there are many other problems such as inconvenience of welding process, excessive assembly time (i.e., reduction in operating speed) due to the welding, degradation in assemblability and productivity, etc.

In addition, when a nickel plate is improperly welded or a certain cell needs to be repaired or replaced in the event of a failure, the corresponding nickel plate welded to the cells and the taping on the cells should be disassembled. As a result, the disassembled cells and nickel plate should be discarded, which increases the cost, and the process of welding the nickel plate to the cells and taping the cells should be repeated. Especially, it is impossible to replace only a specific cell having a failure, damage, or welding defect, and thus there are many losses in terms of cost and time during maintenance and repair as well as during production.

Additionally, it is impossible to change the number of cells after the production and there are many limitations in terms of expansion. Since the nickel plates (i.e., connection plates) are connected to the terminals (i.e., electrodes) of all unit cells, the area of the contact point (i.e., welding point) is not constant, which causes a difference in contact resistance between the unit cells, thereby causing differences in current and voltage. Therefore, when a plurality of cell packs are connected together for the purpose of expansion, it is necessary to control the cell balancing using a circuit due to the differences in current and voltage occurring in the cell packs.

When the cell packs are connected together for the expansion, a plurality of cables are required, which causes many problems such as cumbersomeness of the cables, inefficient use of space due to the cables, confined space, etc.

Moreover, when the terminals of the cells are welded to the connection plates for electrically connecting the cells to each other, the contact area (i.e., the area of the welding point) between the connection plates and the cells is small, and thus a large amount of heat is generated (especially, during discharge), which is disadvantageous in terms of stability.

Furthermore, in a structure where the terminals of the cells are connected the connection plates at the welding points, the contact area is small, and thus it is impossible to increase the current capacity of the cells. That is, since it is impossible to perform the welding process by increasing the welding points as the contact points, it is impossible to increase the current capacity.

### [Disclosure]

### [Technical Problem]

Accordingly, the present invention has been made to solve the above-described problems, and an object of the present invention is to provide an instrument connection type unit pack-combined cell cartridge and a cartridge-combined electricity storage device with a series and parallel interconnection.

### [Technical Solution]

To accomplish the above object of the present invention, there is provided an instrument connection type unit pack-combined cell cartridge comprising: a plurality of unit packs, in which a plurality of cells including a pair of terminal plates provided on both ends of each cell are connected to each other by the terminal plates and a plurality of bus bars provided in a unit case, and a plurality of connection portions formed on each end of the bus bars and project to the outside of the unit case; a cartridge case into which the unit packs are inserted; and a PCB to which the connection portions of the unit packs are connected, wherein the connection portions of the unit packs inserted into the cartridge case are connected to each other by a plurality of intermediate conductive plates to be electrically connected to a plurality of terminals of the PCB via the intermediate conductive plates or are electrically connected directly to the terminals of the PCB.

In a preferred embodiment, the terminal plates of the cells may be connected to the plate-type bus bars in a surface contact manner.

The cells may be connected in parallel via the terminal plates and the bus bars in each of the unit packs.

The cells in each of the unit packs may be disposed parallel to each other in the unit case such that the terminal plates provided on positive (+) terminals of the cells are connected to the bus bars having a positive (+) polarity and the terminal plates provided on negative (-) terminals of the cells are connected to the bus bars having a negative (-) polarity.

The unit packs may be connected in series or parallel by the intermediate conductive plates connected to the connection portions.

The intermediate conductive plates may be connected and fastened to the connection portions in a surface contact manner.

The cartridge case may comprise a plurality of vent holes for discharging heat dissipated from the unit packs to the outside and preventing the temperature of the unit packs from rising.

The unit case may comprise a plurality of receiving portions formed on the inner side of the unit case to fix the positions of the cells received in the unit case and to space the cells from each other, thereby radiating heat.

The unit case may comprise a plurality of vent holes for preventing temperature rise.

### [Advantageous Effects]

Therefore, the present invention provides the following effects.
1. According to the unit pack- combined cell cartridge according to the present invention, the cells and the unit packs are connected by an instrument for facilitating connection and disconnection, and thus the assemblability and productivity are significantly improved. Moreover, it is possible to easily control the voltage and current capacity by appropriately controlling the number of cells placed in a unit pack, the number of unit packs used in a cartridge, and the number of cartridges used in an electricity storage device (according to the present invention).
2. The cells are spaced at regular intervals by the receiving portions in the unit case, and the heat discharge and ventilation are made by the vent holes formed in the unit case. Thus, it is possible to prevent the temperature of the cells from rising to a predetermined level and solve the problems such as cell damage and deterioration in stability due to the generated heat. Moreover, due to a gap between the cells and the sides of the unit case, it is possible to maximize the heat discharge and ventilation.
3. To connect the cells mounted in the unit pack in parallel, the terminal plates of the cells are connected to the plate-type bus bars in a surface contact manner, and thus the contact resistance can be minimized. Therefore, it is possible to minimize the heat generation due to the contact resistance, prevent the cells from being damaged, improve the lifespan of the cells, and increase the stability. Moreover, the limitations of current capacity can be overcome by the large area contact. Further, it is possible to bring the terminal plates of the cells into contact with the bus bars in a surface contact manner, and thus it is possible to solve the problem of differences in current and voltage between the cells. In addition, it is possible to facilitate the replacement or repair of a defective cell.
4. The unit packs are connected and fastened by the instruments, and thus electrical wirings such as cables are not required. Moreover, the instruments connect between the cells, between the unit packs, and between the cell cartridges in series and/or parallel to achieve the cell balancing, and thus a separate circuit for controlling the balancing is not required.

### [Description of Drawings]

FIGS. 1 and 2 are perspective views of a conventional cell pack, in which FIG. 1 is a top perspective view and FIG. 2 is a bottom perspective view.
FIG. 3 is an overall perspective view of a unit pack-combined cell cartridge in accordance with a preferred embodiment of the present invention.
FIG. 4 is an exploded perspective view of the unit pack-combined cell cartridge shown in FIG. 3.
FIG. 5 is a perspective view showing a state in which connection portions of unit packs are connected by intermediate conductive plates in the unit pack-combined cell cartridge shown in FIG. 3.
FIG. 6 is a perspective view showing a state in which a PCB is further mounted in the unit pack-combined cell cartridge shown in FIG. 5.
FIG. 7 is a perspective view showing a unit pack in accordance with a preferred embodiment of the present invention.
FIG. 8A is an exploded perspective view of the unit pack shown in FIG. 7.
FIGS. 8B and 8C are exploded perspective views of other unit packs used together with the unit pack shown in FIG. 8A in the unit pack-combined cell cartridge shown in FIG. 6.
FIG. 9 is a perspective view showing a state in which bus bars are connected to a lower case in the unit pack shown in FIG. 7.
FIG. 10 is a perspective view showing a state in which cells are further mounted in the unit pack shown in FIG. 9.
FIG. 11 is a perspective view showing a state in which bus bars are doubly mounted in the unit pack shown in FIG. 9.
FIGS. 12 and 13 are schematic diagrams showing the configuration of an electricity storage device in accordance with another preferred embodiment of the present invention, in which FIG. 12 shows the appearance of the electricity storage device and FIG. 13 shows a state in which a plurality of cell cartridges are mounted in an outer case of the electricity storage device.

| | |
|---|---|
| 100: cell cartridge | 110: cartridge case |
| 120a, 120b & 120c: unit packs | |
| 140: cell | 141: terminal plate |
| 151, 152, 153, 154, 155, 156, 157 & 158: | bus bars |
| 160: | PCB |

### [Mode for Invention]

Hereinafter, preferred embodiments of the present invention will be described in detail with reference to the accompanying drawings.

A unit pack-combined cell cartridge in accordance with a preferred embodiment of the present invention is **characterized in that** a plurality of cells are connected together using an instrument (i.e., bus bar) to configure a unit pack, and a plurality of unit packs are connected together using an instrument (i.e., intermediate conductive plate) to configure the cell cartridge, in which all of the unit packs are connected and fastened only by the instruments without cables and connectors.

In the unit pack-combined cell cartridge of the present invention, the cells and the unit packs are connected by an instrument for facilitating the connection and disconnection, and thus the assemblability and productivity are significantly improved. Moreover, it is possible to easily control the voltage and current capacity by appropriately controlling the number of cells placed in a unit pack, the number of unit packs used in a cartridge, and the number of cartridges used in an outer case (in the electricity storage device of the present invention).

In the preferred embodiments of the present invention, the cell may include a lithium ion (Li-ion) cell, a Li-ion polymer cell, a nickel-cadmium (Ni-Cd) cell, a nickel-metal hydride (Ni-MH) cell, a lead-acid cell, etc.

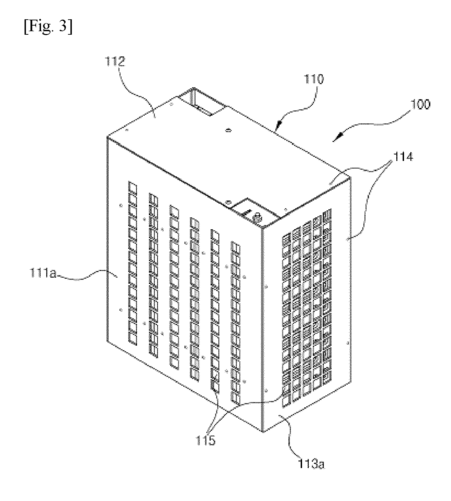

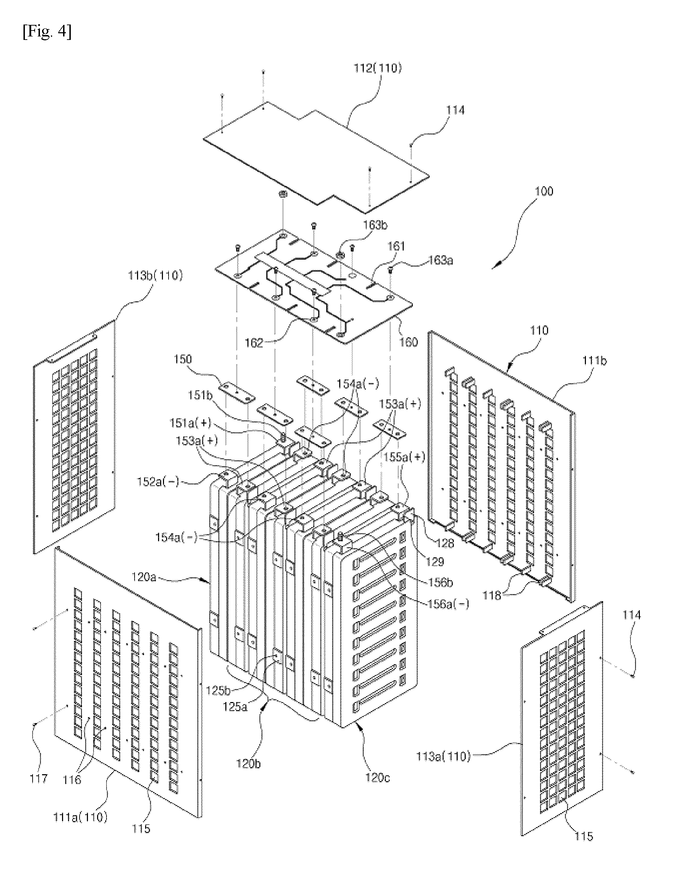

FIG. 3 is an overall perspective view of a unit pack-combined cell cartridge 100 in accordance with a preferred embodiment of the present invention, and FIG. 4 is an exploded perspective view of the unit pack-combined cell cartridge 100 shown in FIG. 3.

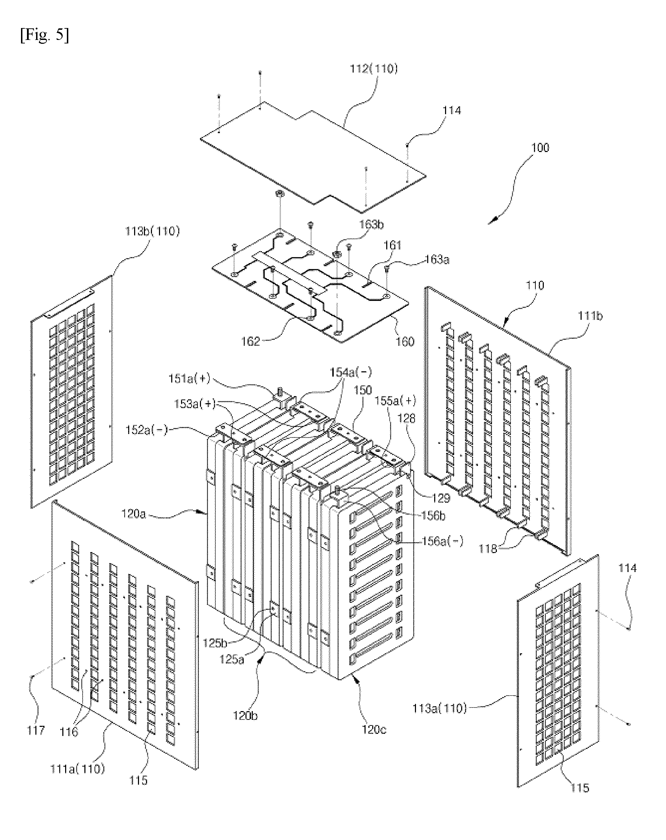

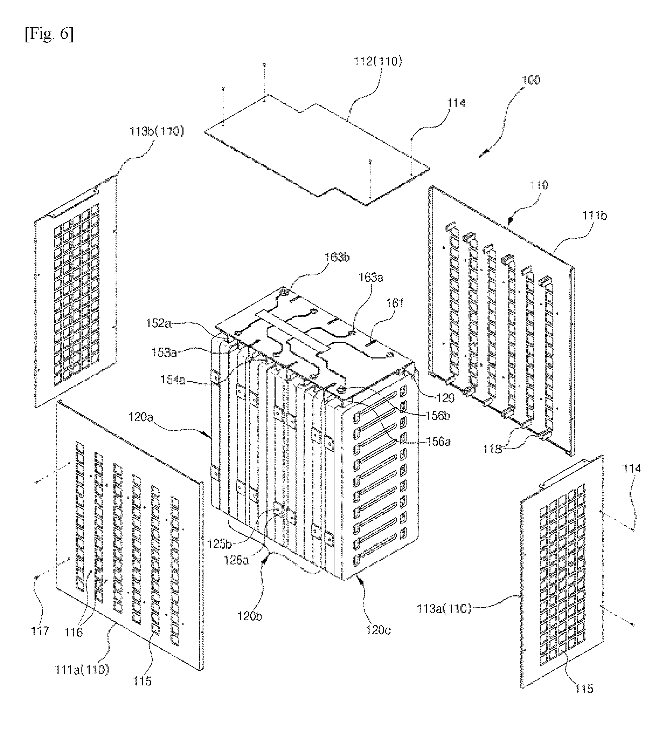

Moreover, FIG. 5 is a perspective view showing a state in which connection portions 152a, 153a, 154a and 155a of unit packs 120a, 120b and 120c are connected by intermediate conductive plates 150 in the unit pack-combined cell cartridge shown in FIG. 3, FIG. 6 is a perspective view showing a state in which a PCB 160 is mounted in the unit pack-combined cell cartridge shown in FIG. 5, and in FIGS. 5 and 6, a cartridge case 110 is exploded to clearly show the internal configuration.

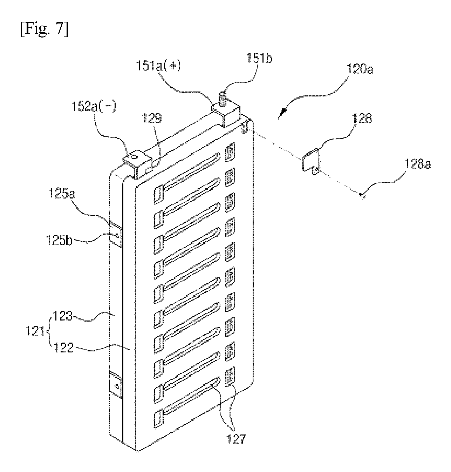

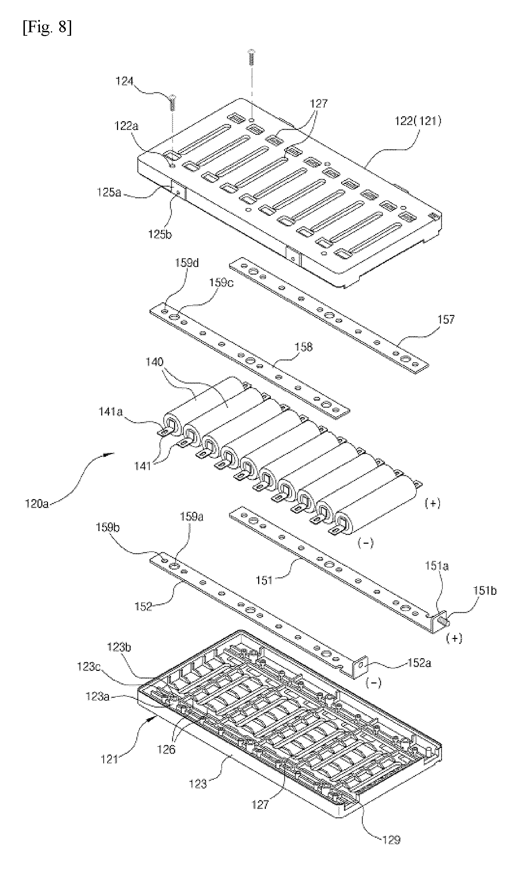

FIG. 7 is a perspective view showing a unit pack 120a in accordance with a preferred embodiment of the present invention, FIG. 8A is an exploded perspective view of the unit pack 120a shown in FIG. 7, and FIGS. 8B and 8C are exploded perspective views of other unit packs 120b and 120c used together with the unit pack shown 120a in FIG. 8A in the unit pack-combined cell cartridge 100 shown in FIG. 6.

As shown in FIG. 6, the cell cartridge 100 in accordance with a preferred embodiment of the present invention comprises a combination of three types of unit packs 120a, 120b and 120c classified according to positive (+) and negative (-) bus bars 151, 152, 153, 154, 155 and 156 and connection portions 151a, 152a, 153a, 154a, 155a and 156a as externally projecting terminals, and the unit packs of the respective types are denoted by reference numerals 120a, 120b and 120c.

Therefore, the unit pack 120a is shown in FIG. 8A, the unit pack 120b is shown in FIG. 8B, and the unit pack 120c is shown in FIG. 8C, respectively.

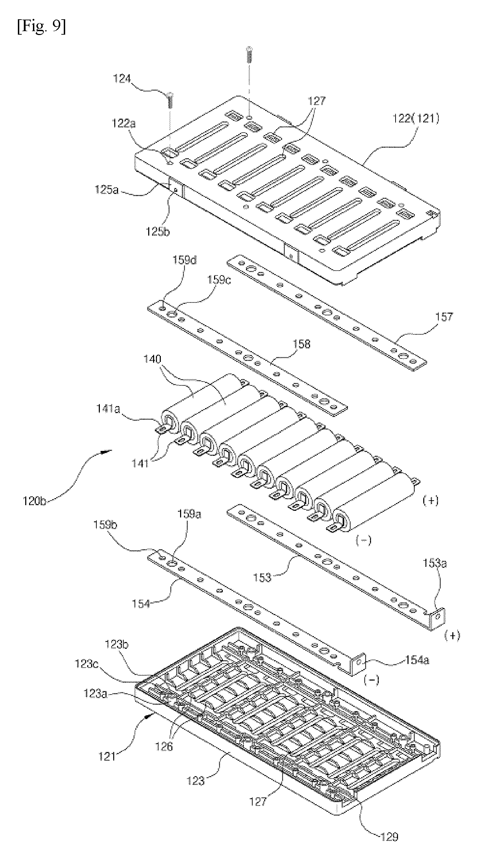

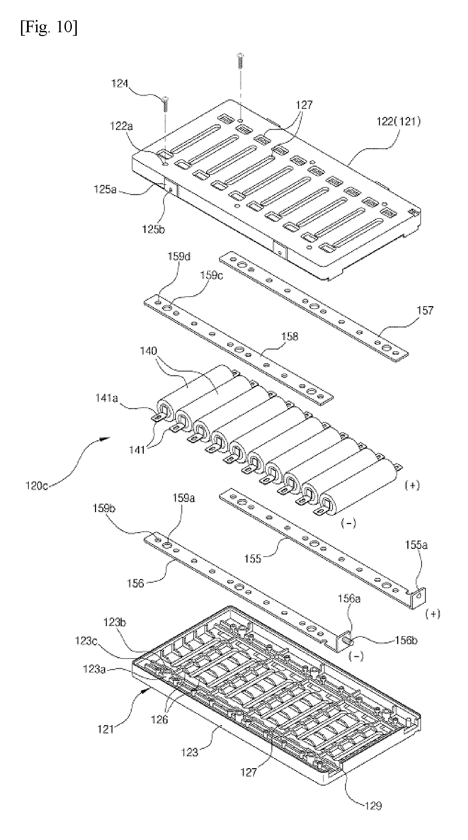

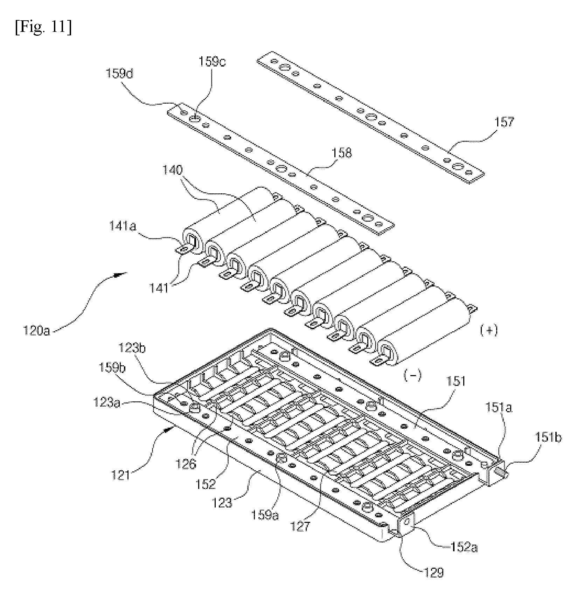

FIG. 9 is a perspective view showing a state in which the bus bars 151 and 152 are connected to a lower case 123 in the unit pack 120a shown in FIG. 7, FIG. 10 is a perspective view showing a state in which cells 140 are further mounted in the unit pack 120a shown in FIG. 9, FIG. 11 is a perspective view showing a state in which bus bars 151, 152, 157 and 158 are doubly mounted in the unit pack 120a shown in FIG. 9, and in FIGS. 9 to 11, an upper case is not shown.

In the present invention, the cells 140 are disposed in a case (i.e., unit case) 121 of each of the unit packs 120a, 120b and 120c and connected and fastened by an instrument, and the assembled unit packs 120a, 120b and 120c are mounted in an outer case 110 (i.e., cartridge case), connected and fastened by an instrument, and finally connected to terminals 162 of the PCB 160, thereby forming a single integrated cell cartridge 100.

Here, the cells 140 in each of the unit packs 120a, 120b and 120c are connected in parallel by the instrument (i.e., bus bar), and the unit packs 120a, 120b and 120c are connected in series and parallel by the instrument (i.e., intermediate conductive plate).

First, as shown in the figures, the outer case of the unit pack-combined cell cartridge 100, i.e., the cartridge case 110 comprises a front plate 111a, a rear plate 111b, an upper plate 112, and left and right side plates 113a and 113b. That is, these plates are assembled together to form a rectangular parallelepiped cartridge case 110 having an internal space in which the unit packs 120a, 120b and 120c are accommodated.

The respective plates may be assembled into the single cartridge case 110 by any of known methods such as by fastening overlapping portions using fastening means such as screws 114, rivets, etc., by welding the plates when the plates are metal plates, by forming a projection and a groove in corresponding positions and engaging the projection with the groove, or by clamping the plates using a clamping means. Of course, a combination of the above-mentioned methods may be adopted.

The upper plate 112 is a kind of cover for covering the top of the PCB 160 being mounted in the unit pack-combined cell cartridge 100. A plurality of vent holes 115 are formed in the front plate 111a, the rear plate 111b, and the left and right side plates 113a and 113b , respectively, to discharge the heat dissipated from the unit packs 120a, 120b and 120c to the outside and prevent the temperature of the unit packs 120a, 120b and 120c from rising.

Meanwhile, the plurality of unit packs 120a, 120b and 120c are inserted into the cartridge case 110 and spaced at regular intervals, and the configuration of the unit packs 120a, 120b and 120c will be described below.

According to the unit pack-combined cell cartridge 100 of the present invention, the plurality of unit packs 120a, 120b and 120c are inserted into the cartridge case 110 in a stacked manner, each of the unit packs 120a, 120b and 120c having a rectangular parallelepiped shape.

Here, each of the unit packs 120a, 120b and 120c comprises a unit case 121, a plurality of cells 140 placed parallel to each other in the internal space of the unit case 121 in which terminal plates 141 of the cells 140 are welded to both (+) and (-) terminals (i.e., electrodes), and a plurality of bus bars 151, 152, 153, 154, 155 and 156 assembled and fixed in the unit case 121, the bus bars corresponding to the instrument for connecting the terminal plates 141 of the cells 140.

The unit case 121 comprises an upper case 122 and a lower case 123, which form the internal space in which the cells 140 are accommodated.

The upper case 122 and the lower case 123 may be formed of plastic as an insulating material and assembled together by any of known methods such as by fastening the corresponding portions of the cases 122 and 123 using screws 124, by engaging a projection with a groove formed in the cases 122 and 123, by engaging projections formed in the cases 122 and 123, or by clamping the cases 122 and 123 using a clamping means. Of course, a combination of the above-mentioned methods may be adopted.

As an example of using the screws 124, a screw hole 122a through which the screw can penetrate is formed on the upper case 122, and a fastening hole 123b into which the screw 124 is inserted and fastened is formed on the lower case 123. Then, the upper case 122 is covered on the lower case 123 such that the screw hole 122a coincides with the fastening hole 123b, and then the screw 123 is passed through the screw hole 122a of the upper case 122 and fastened to the fastening hole 123b of the lower case 123.

Preferably, the fastening hole 123b of the lower case 123 may be formed in a fastening portion 123a as a structure projecting from the inner side of the lower case 123, and the fastening portion 123a is a cylindrical projection which will be inserted into an insertion hole 159a of each of the bus bars 151, 152, 153, 154, 155 and 156 which will be described in detail later.

When the upper case 122 and the lower case 123 are fastened together in the above-described manner, it is preferred that a plurality of fastening portions 123a and fastening holes 123b are provided in the lower case 123 and a plurality of screw holes 122a are provided in the upper case 122, thereby providing a plurality of fastening points.

Moreover, a plurality of fastening holes 125b are formed on both sides of the unit case 121 comprising the upper case 122 and the lower case 123 to be screw-fastened to the cartridge case 110 as the outer case such that the unit packs 120a, 120b and 120c are fixedly positioned in the internal space of the cartridge case 110.

That is, in a state where the unit packs 120a, 120b and 120c are placed in the internal space of the cartridge case 110, a plurality of screws 117 are inserted and fastened to the fastening holes 125b of the unit packs 120a, 120b and 120c (i.e., unit case) from the outside to the inside through a plurality of fastening holes 116 formed in the corresponding portions of the cartridge case 110 such that the unit packs 120a, 120b and 120c are completely fixed in the internal space of the cartridge case 110.

Moreover, a plurality of receiving portions 126 are formed on the inner side of the unit case 121 to fix the positions of the cells 140 placed in the internal space and to space the cells 140 received in their correct positions.

Since the plurality of cells 140 are placed in the unit case 121, it is very important to discharge the heat dissipated from the cells 140 and provide ventilation in the case (i.e., a cell cooling structure in the case). Therefore, the plurality of receiving portions 126 in which the cells 140 are spaced from each other and fixedly mounted are formed on the unit case 121 of each of the unit packs 120a, 120b and 120c.

The sides of the cells 140 are in contact with the receiving portions 126 on the inner side of the unit case 121. Thus, it is preferred that the receiving portions 126 are provided in the form of a rib projecting a predetermined height from the inner side of the unit case 121 such that there is a gap between the inner side of the unit case 121 and the sides of the cells 140.

Referring to FIGS. 8A to 8C, it can be seen that a plurality of receiving portions 126 provided in the form of a rib and supporting the sides of the cells 140 are formed on the inner side of the unit case 121. With the receiving portions 126 provided in the form of a rib, there are gaps between the cells 140 and between the cells 140 and the inner side of the unit case 121, and thus it is possible to efficiently discharge the heat dissipated from the cells 140 and cool the cells 140 by ventilation.

The receiving portions 126 may be formed on both or either of the inner sides of the upper case 122 and the lower case 123, which constitute the unit case 121. When the receiving portions 126 are formed on either of the inner sides of the upper case 122 and the lower case 123, it is preferred in terms of assemblability that the receiving portions 126 are formed on one of the upper and lower cases 122 and 123 (e.g., lower case) to which the bus bars 151, 152, 153, 154, 155 and 156 are connected.

In a preferred embodiment, the gap between the cells 140 maintained by the receiving portions 126 may be at least 1.5 mm.

Moreover, a plurality of vent holes 127 are formed in the unit case 121, i.e., on the upper case 122 and the lower case 123 in a direction parallel to the longitudinal direction of the cells 140 as shown in the figures.

Otherwise, since the portion from which most heat is generated during discharge corresponds to the center of the cell 140 with respect to the longitudinal direction of the cell 140, a plurality of vent holes (not shown) may be formed in the unit case 121 to meet the centers of the cells 140. That is, the vent holes are formed on the upper case 122 and the lower case 123 in positions just outside the centers of the cells 140. Here, the vent holes are formed in the width direction of the cells 140 such that the centers of the cells 140 are exposed to the outside.

As such, the cells 140 are spaced at regular intervals by the receiving portions 126 in the unit case 121 and the heat discharge and ventilation are made by the vent holes 127 in the unit case 121. As a result, it is possible to prevent the temperature of the cells 140 from rising to a predetermined level and solve the problems such as cell damage and deterioration in stability due to the generated heat.

Meanwhile, in the unit packs 120a, 120b and 120c according to the present invention, the cells 140 are connected to the plate-type bus bars 151, 152, 153, 154, 155 and 156 in a surface contact manner with a relatively large area, not in a point contact manner, which will be described below.

First, as shown in FIGS. 8A to 8C, the terminal plates 141 are provided on both (+) and (-) terminals (i.e., electrodes) of the cells 140 such that the terminal plates 141 connect the cells 140 in parallel to each other using the plate-type conductive bus bars 151, 152, 153, 154, 155 and 156 in the unit case 121.

That is, the cells 140 are received on the receiving portions 126 in the unit case 121 and connected in parallel by fastening the terminal plates 141 of the cells 140 to the plate-type conductive bus bars 151, 152, 153, 154, 155 and 156.

Since the terminal plates 141 and the bus bars 151, 152, 153, 154, 155 and 156 are the electrical connection components, they should be formed of a conductive material. For example, the terminal plates 141 may be formed of nickel, silver, copper, gold, aluminum, magnesium, sodium, etc., and the bus bars 151, 152, 153, 154, 155 and 156 may be a conductive plate such as a nickel plate, a copper plate, etc.

The bus bars 151, 152, 153, 154, 155 and 156 are conductive means for connecting the terminal plates 141 of the cells 140, placed in the unit case 121, in the width direction. The bus bars 151, 152, 153, 154, 155 and 156 are formed into a plate-type structure and fixedly mounted on the inner side of the unit case 121 in the lateral direction.

The cells 140 placed in the unit case 121 are connected in parallel by the bus bars 151, 152, 153, 154, 155 and 156. When the cells 140 are spaced at regular intervals and disposed parallel to each other in the unit case 121, the positive (+) terminal plates of the cells 140 are connected together by the bus bars 151, 152, 153, 154, 155 and 156, and the negative (-) terminal plates of the cells 140 are connected together by the bus bars 151, 152, 153, 154, 155 and 156, respectively.

To this end, the positive (+) and negative (-) bus bars 151, 152, 153, 154, 155 and 156 are mounted on the ends of the cells 140, and the insertion holes 159a, into which the fastening portions 123a of the lower case 123 are inserted, are formed in each of the bus bars 151, 152, 153, 154, 155 and 156.

Moreover, the terminal plates 141 of the cells 140 may be connected and fastened to the bus bars 151, 152, 153, 154, 155 and 156 by screws or rivets.

That is, in a state where the terminal plates 141 of the cells 140 are in contact with the bus bars 151, 152, 153, 154, 155 and 156 such that a plurality of fastening holes 141a of the terminal plates 141 coincide with a plurality of fastening holes 159b of the bus bars 151, 152, 153, 154, 155 and 156, a plurality of screws (denoted by reference numeral 142 in FIG. 11) are passed through the fastening holes 141a and 159b of the terminal plats 141 and the bus bars 151, 152, 153, 154, 155 and 156 and fastened to a plurality of fastening holes 123c formed on the inner side of the unit case 121 (i.e., lower case), thereby fixing the bus bars 151, 152, 153, 154, 155 and 156 and the terminal plates 141 to the unit case 121 in a surface contact manner.

When the fastening portions 123a are formed on the unit case 121 and the insertion holes 159a are formed in the bus bars 151, 152, 153, 154, 155 and 156, the fastening portions 123a of the unit case 121 are inserted into the insertion holes 159a of the bus bars 151, 152, 153, 154, 155 and 156, before fastening the terminal plates 141 of the cells 140 to the bus bars 151, 152, 153, 154, 155 and 156, such that the positions of the bus bars 151, 152, 153, 154, 155 and 156 can be fixed in advance in the unit case 121 (i.e., lower case), thereby facilitating the assembly.

That is, during assembly of the bus bars 151, 152, 153, 154, 155 and 156, it is possible to accurately position the bus bars 151, 152, 153, 154, 155 and 156 by inserting the fastening portions 123a of the lower case 123 into the insertion holes 159a. In this state, when the terminal plates 141 of the cells 140 placed on the receiving portions 126 are fastened to the bus bars 151, 152, 153, 154, 155 and 156, the positions of the bus bars 151, 152, 153, 154, 155 and 156 are fixed, and thus the screw fastening process is further facilitated.

Referring to FIGS. 8A to 8C, it can be seen that the fastening holes 141a, to which the screws (142 in FIG. 11) are to be fastened, are formed in the terminal plates 141 welded to the cells 140. Moreover, referring to FIGS. 8A to 8C, it can be seen that the plurality of insertion holes 159a, into which the fastening portions 123a of the unit case 121 are inserted, and the plurality of fastening holes, into which the screws 142 (for fastening the terminal plates) are fastened, are formed in the bus bars 151, 152, 153, 154, 155 and 156, respectively.

Moreover, the connection portions 151a, 152a, 153a, 154a, 155a and 156a, which project to the outside of the unit packs 120a, 120b and 120c through a plurality of holes 129 of the unit case 121, are formed on the ends of the bus bars 151, 152, 153, 154, 155 and 156 mounted in their correct positions. The connection portions 151a, 152a, 153a, 154a, 155a and 156a are provided to connect the bus bars 151, 152, 153, 154, 155 and 156 to the outside and may be bent into a "┐" shape.

The assembly procedure of the unit packs 120a, 120b and 120c having the above-described configuration will be described below. First, the positive (+) and negative (-) bus bars 151, 152, 153, 154, 155 and 156 are mounted on the lower case 123, respectively, in a manner that the fastening portions 123a of the lower case 123 are inserted into the insertion holes 159a.

Then, the cells 140 are placed on the receiving portions 126 on the inner side of the lower case 123 and, here, the terminal plats 141 of the cells 140 are superimposed on the bus bars 151, 152, 153, 154, 155 and 156 such that the fastening holes 141a of the terminal plates 141 coincide with the fastening holes of the bus bars 151, 152, 153, 154, 155 and 156.

Subsequently, the terminal plates 141 of the cells 140 are fastened to the bus bars 151, 152, 153, 154, 155 and 156, respectively, using the screws (142 in FIG. 11) in a manner that the screws 142 are passed through the fastening holes 141a and 159b of the terminal plats 141 and the bus bars 151, 152, 153, 154, 155 and 156 and fastened to the fastening holes 123c formed on the inner side of the lower case 123.

Next, the lower case 123 is covered on the upper case 122 and the screws 124 are fastened, thereby completing the assembly. Upon completion of the assembly, the connection portions 151a, 152a, 153a, 154a, 155a and 156a of the bus bars 151, 152, 153, 154, 155 and 156 are exposed to the outside of the unit packs 120a, 120b and 120c.

Here, since the terminal plates 141 welded to the positive (+) terminals of the cells 140 and the terminal plates 141 welded to the negative (-) terminals of the cells 140 in the unit packs 120a, 120b and 120c are connected in parallel by the respective bus bars 151, 152, 153, 154, 155 and 156, a total of two connection portions 151a, 152a, 153a, 154a, 155a and 156a having the positive (+) and negative (-) polarities are exposed to the outside of each of the unit packs 120a, 120b and 120c.

That is, one of the two connection portions 151a, 152a, 153a, 154a, 155a and 156a corresponds to the connection portion connected to the terminal plates 141 welded to the positive (+) terminals of the cells 140, and the other corresponds to the connection portion connected to the terminal plates 141 welded to the negative (-) terminals of the cells 140.

When the cells 140 are connected in parallel by the bus bars 151, 152, 153, 154, 155 and 156, it has been described that the terminal plates 141 of the cells 140 are placed on the bus bars 151, 152, 153, 154, 155 and 156 and fastened using the screws 142. However, as shown in the figures, it is possible to fasten additional bus bars 157 and 158 to the terminal plates 141 of the cells 140 using screws or rivets. That is, the bus bars 151, 152, 153, 154, 155, 156, 157 and 158 are fastened to the top and bottom of the terminal plates 141 of the cells 140.

In this case, the terminal plates 141 of the cells 140 are interposed between the bus bars 151, 152, 153, 154, 155, 156, 157 and 158 such that both sides of the terminal plates 141 are in contact with the bus bars, and thus the contact area can be increased. Moreover, the bus bars 157 and 158 at the top of the terminal plates 141 uniformly presses the terminal plates 141, and thus it is possible to uniformly maintain the contact area of the terminal plates 141 with respect to all of the cells 140.

As a result, there are various advantages such as increase in contact area, reduction in contact resistance, stable connection state, minimization of heat generation, minimization of differences in current and voltage between the cells, etc.

The bus bars 157 and 158 at the top of the terminal plates 141 may also include a plurality of insertion holes 159c and fastening holes 159d used for the same purposes as the bus bars 151, 152, 153, 154, 155 and 156 at the bottom of the terminal plates 141.

In the above-described process of fastening the terminal plates 141 welded to the cells 140 to the bus bars 151, 152, 153, 154, 155 and 156 so as to connect the cells 140 mounted in the unit packs 120a, 120b and 120c in parallel to each other, it is possible to connect the terminal plates 141 and the plate-type bus bars 151, 152, 153, 154, 155 and 156 in a surface contact manner with a relatively large area, not in a point contact manner, and thus it is possible to minimize the contact resistance. Therefore, it is possible to minimize the heat generation due to the contact resistance, prevent the cells from being damaged, improve the lifespan of the cells, and increase the stability. Moreover, the limitations of current capacity can be overcome by the large area contact.

In a state where the cells 140 are received in their correct positions in the unit case 121, the terminal plates 141 and the plate-type bus bars 151, 152, 153, 154, 155, 156, 157 and 158 are fastened together in a surface contact manner, and thus the terminal plates 141 of the cells 140 can be in uniform surface contact with the bus bars 151, 152, 153, 154, 155, 156, 157 and 158, thereby solving the problem of differences in current and voltage between the cells.

Furthermore, according to the unit packs 120a, 120b and 120c having the above-described configuration, it is possible to easily control the current capacity of all the unit packs by controlling the number of cells 140 (i.e., it is easy to increase and decrease the number of cells 140). In particular, since all of the cells 140 are connected and fastened by the instruments, it is possible to facilitate the replacement or repair of a defective cell, if necessary.

Meanwhile, as shown in FIG. 4, in the unit pack-combined cell cartridge according to the present invention, after the plurality of unit packs 120a, 120b and 120c are inserted into the cartridge case 110 and electrically connected together by the instrument (i.e., intermediate conductive plate), the PCB 160 is mounted thereon.

Here, the connection portions 151a, 152a, 153a, 154a, 155a and 156a of the unit packs 120a, 120b and 120c exposed to the outside are directly connected to the terminals 162 of the PCB 160 or the connection portions 152a, 153a, 154a and 155a of the unit packs 120a, 120b and 120c are connected together using the intermediate conductive plates 150, thereby forming a single unit pack-combined cell cartridge 100 in which all of the unit packs 120a, 120b and 120c inserted into the cartridge case 110 are electrically connected together.

In the present invention, the cells 140 mounted in the unit packs 120a, 120b and 120c are connected in parallel and, at the same time, the unit packs 120a, 120b and 120c inserted into the cartridge case 110 are connected in series and parallel, thereby forming a cell cartridge 100 in which all of the cells 140 are connected in series and parallel. As a result, it is possible to provide a high-capacity, high-voltage and high-current unit pack-combined cell cartridge.

The positions of the plurality of unit packs 120a, 120b and 120c inserted into the cartridge case 110 are fixed in the cartridge case 110 such that they are not in contact with each other but spaced from each other.

The unit packs 120a, 120b and 120c may be fixed in the cartridge case 110 by fastening the screws 117 to the fastening holes 125b formed on both sides of the unit case 121 in the above-mentioned manner. Here, it is preferred that the fastening holes 125b of the unit packs 120a, 120b and 120c are formed in fastening portions 125a projecting a predetermined height from the outer surface of the unit packs 120a, 120b and 120c, i.e., from the side surfaces of the unit packs 120a, 120b and 120c such that the side surface of the unit packs 120a, 120b and 120c and the inner side of the cartridge case 110 are spaced from each other.

Moreover, after the screws 117 are fastened to the fastening holes 125b of the unit case 121 and the fastening holes 116 of the cartridge case 110 in a state where the fastening portions 125a projecting from the sides of the unit case 121 are in contact with the inner side of the cartridge case 110, the outside surface of the unit case 121 (i.e., unit packs) can be spaced from the inner side of the cartridge case 110 by the height of the connection portions.

In a preferred embodiment, a plurality of spacers 118 may be formed on the cartridge case 110 such that the unit packs 120a, 120b and 120c mounted in the cell cartridge 100 are spaced from each other.

The spacers 118 are spaced at regular intervals on the inner side of the cartridge case 110 and project to be interposed between the unit packs 120a, 120b and 120c inserted into the cartridge case 110.

As a result, the spacers 118 space the unit packs 120a, 120b and 120c inserted into the cartridge case 110. That is, when the unit packs 120a, 120b and 120c are inserted between the spacers 118 in the cartridge case 110, the unit packs 120a, 120b and 120c can be spaced from each other at regular intervals.

Moreover, in each of the unit packs 120a, 120b and 120c, the positive (+) connection portions 151a, 153a and 155a (electrically connected to the positive (+) terminal plates of the cells), which are integrally formed with the bus bars 151, 152 and 155, and the negative (-) connection portions 152a, 154a and 156a (electrically connected to the negative (-) terminal plates of the cells), which are integrally formed with the bus bars 152, 154 and 156, are exposed to the outside. Here, the connection portions 152a, 153a, 154a and 155a of adjacent unit packs 120a, 120b and 120c are connected together by the intermediate conductive plates 150, and the intermediate conductive plates 150 are electrically connected to the terminal terminals 162 of the PCB 160.

The intermediate conductive plates 150 are conductive members for connecting the unit packs in series or parallel to each other. That is, when the unit packs 120a, 120b and 120c are connected in series, the intermediate conductive plates 150 connect between the connection portions 152a, 153a, 154a and 155a having opposite polarities between adjacent unit packs 120a, 120b and 120c.

Moreover, when the unit packs 120a, 120b and 120c are connected in parallel, the intermediate conductive plates 150 connect between the connection portions 152a, 153a, 154a and 155a having the same polarity between adjacent unit packs 120a, 120b and 120c.

FIGS. 4 and 5 show an example in which the unit packs 120a, 120b and 120c are connected in series.

In more detail, when all of the unit packs 120a, 120b and 120c placed in the cartridge case 110 are intended to be connected in series, it is necessary to carefully insert the unit packs 120a, 120b and 120c into the cartridge case 110 such that the direction of each of the unit packs 120a, 120b and 120c is not changed.

Here, the connection portions 152a, 153a, 154a and 155a of adjacent unit packs 120a, 120b and 120c after insertion should be connected in series by the intermediate conductive plates 150, and thus the connection portions having the opposite polarities in the arrangement of the unit packs 120a, 120b and 120c should be alternately arranged in the same direction. That is, the connection portions having the opposite polarities should be alternately positioned in the order of (+), (-), (+), (-)... in the same direction.

After the unit packs 120a, 120b and 120c are inserted into the cartridge case 110 in the above-described manner, the connection portions 152a, 153a, 154a and 155a having the opposite polarities of adjacent two unit packs are connected together by the intermediate conductive plate 150, and then the PCB 160 is mounted thereon in a manner that the connection portions 151a and 156a of two unit packs 120a and 120c positioned on both ends are directly connected to the terminals 162 of the PCB 160 to be electrically connected and each intermediate conductive plate 150 is connected to a predetermined terminal of the PCB 160.

One of the two connection portions 151a and 156a of the unit packs 120a and 120c on both ends directly connected to the terminals 162 of the PCB 160 corresponds to the positive (+) connection portion, and the other corresponds to the negative (-) connection portion.

The connection portions 152a, 153a, 154a and 155a and the intermediate conductive plates 150 may be electrically connected together by fasting bolts (not shown) or rivets to the fastening holes in a surface contact manner. Also, the connection between the terminals 162 of the PCB 160 and the connection portions 151a, 152a, 153a, 154a, 155a and 156a and between the terminals 162 of the PCB 160 and the intermediate conductive plates 150 can be electrically made by fastening bolts 151b, 156b and 163a in a surface contact manner.

The PCB 160 is mounted in such a manner that the connection portions 151a, 152a, 153a, 154a, 155a and 156a of the unit packs 120a, 120b and 120c are finally connected to the terminals 162 of the PCB 160, and the upper plate 112 is assembled to the top of the PCB 160, thereby completing a single unit pack-combined cell cartridge 100.

The PCB 160 may comprise a circuit for monitoring the current and voltage of the cells 140 and the unit packs 120a, 120b and 120c and a safety circuit for preventing overcurrent, overvoltage, overcharge, overdischarge, etc.

In FIG. 4, reference numeral 128 denotes a guide plate for preventing misassembly and fastened to each end of the unit packs 120a, 120b and 120c in a predetermined position by a screw 128a. In a state where the unit packs 120a, 120b and 120c are inserted into the cartridge case 110, the guide plate 128 projects upward from the each end of the unit packs 120a, 120b and 120c.

Moreover, a plurality of guide slits 161, into which the guide plates 128 of the unit packs 120a, 120b and 120c are inserted, are formed in predetermined positions of the PCB 160. When the PCB 160 is assembled to the top of the unit packs 120a, 120b and 120c being inserted into the cartridge case 110, the guide plates 128 of the unit packs 120a, 120b and 120c are inserted into the guide slits 161 formed in predetermined positions of the PCB 160.

If the forward and backward direction of each of the unit packs 120a, 120b and 120c is changed when they are inserted into the cartridge case 110 (i.e., if the unit packs 120a, 120b and 120c are inserted upside down), it is impossible to connect the intermediate conductive plates 150 and it is further difficult to achieve a predetermined series and parallel interconnection. For this reason, the guide plates 128 are provided such that an assembler can easily recognize the correct forward and backward direction during insertion of the unit packs 120a, 120b and 120c. Therefore, the assembler must identify whether the guide plates 128 are inserted into the guide slits 161 corresponding to the PCB 160 during the assembly.

If any one of the unit packs 120a, 120b and 120c is inserted upside down, it is impossible to insert the guide plate 128 of the misassembled unit pack 120a, 120b or 120c into the guide slits 161 of the PCB 160, and thus the assembler can recognize the misassembly and correct the insertion direction.

As such, with the guide plates 128 and the guide slits 161, it is possible to prevent the misassembly, facilitate the assembly, reduce the assembly time, and increase the assembly speed.

Meanwhile, the present invention provides a cartridge-combined electricity storage device configured as a single system in which the plurality of unit pack-combined cell cartridges 100 are received in an outer case 2 and connected in series and parallel (i.e., in a composite series-parallel connection manner).

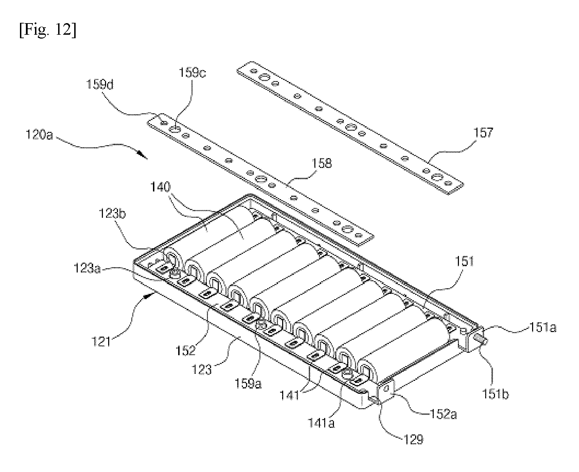

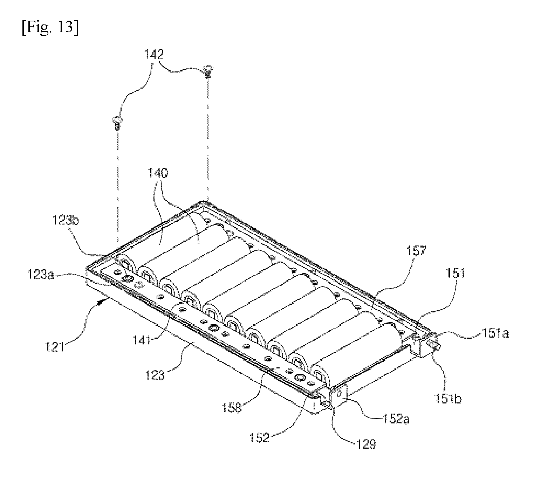

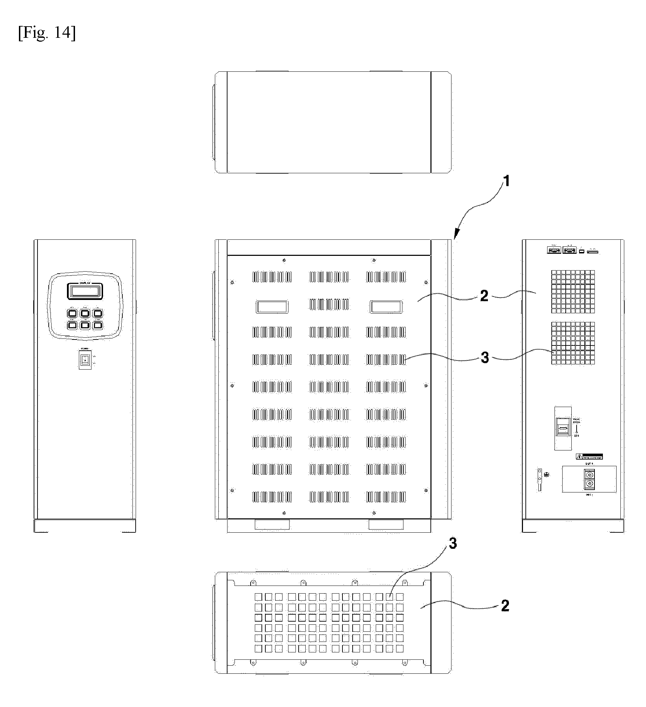

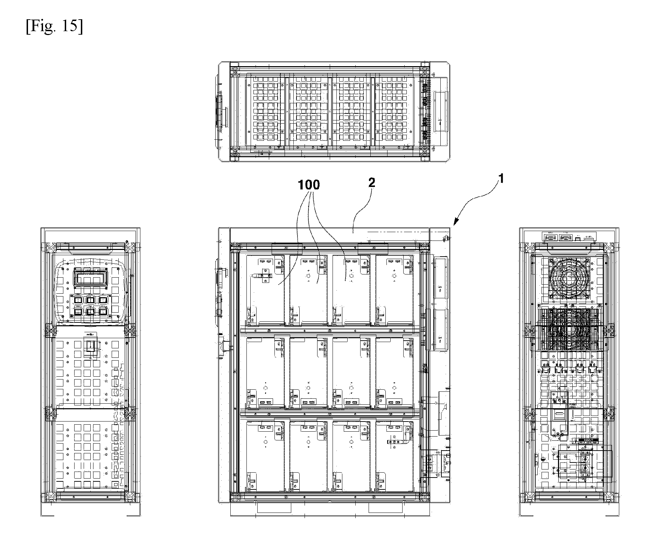

FIGS. 12 and 13 show the configuration of an electricity storage device in accordance with another preferred embodiment of the present invention, in which FIG. 12 shows the appearance of an electricity storage device 1, and FIG. 13 shows the state in which a plurality of cell cartridges 100 are mounted in an outer case 2 of the electricity storage device 1.

As shown in FIGS. 12 and 13, the plurality of cell cartridges 100 are accommodated in the outer case 2 and electrically connected together, thereby forming the electricity storage device 1 as an integrated system. Here, the cell cartridges 100 accommodated in the outer case 2 may be electrically connected together in a manner that the connection portions 151a and 156a are connected by cables, bus bars, or connectors. Here, the bolts 151b, 156b integrally formed with the connection portions 151a and 156a may be used.

The cell cartridges 100 may be connected in series, in parallel, or in a combination of series and parallel in the outer case 2.

For example, connectors (not shown), to which the connection portions 151a and 156a of the cell cartridge 100 are connected may be provided in the outer case 2, and a circuit for connecting the connectors in series, in parallel, or in a combination of series and parallel may be provided in the outer case 2 such that the cell cartridge 100 can be automatically connected to the connectors at the same time when the cell cartridge 100 is accommodated in the outer case 2.

Here, if necessary, it is possible to insert a separator connector, which is automatically connected to a connector of the outer case 2 when the cell cartridge is accommodated in the outer case 2, into each of the connection portions 151a and 156a of the cell cartridge 100.

Moreover, it is preferred that the outer case 2 comprises a plurality of vent holes 3.

As a result, according to the cell cartridge 100 of the present invention having the above-described configuration, it is possible to easily control the voltage and current capacity of all the cell cartridges 100 by appropriately controlling the number of unit packs 120a, 120b and 120c (i.e., it is easy to increase and decrease the number of cells 140). In particular, since all of the unit packs 120a, 120b and 120c are connected and fastened by the instruments, it is possible to improve the assemblability and productivity. Moreover, it is possible to facilitate the replacement or repair of each of the unit packs 120a, 120b and 120c.

Moreover, the unit packs 120a, 120b and 120c are connected and fastened by the instruments, and thus electrical wirings such as cables are not required. Furthermore, the instruments connect between the cells 140, between the unit packs 120a, 120b and 120c, and between the cell cartridges 100 in series and/or parallel to achieve the cell balancing, and thus a separate circuit for controlling the balancing is not required.

While the invention has been shown and described with reference to certain exemplary embodiments thereof, it will be understood by those skilled in the art that various changes in form and details may be made therein without departing from the spirit and scope of the invention as defined by the appended claims.

## Claims

1. An instrument connection type unit pack-combined cell cartridge comprising:
a plurality of unit packs 120a, 120b and 120c, in which a plurality of cells 140 including a pair of terminal plates 141 provided on both ends of each cell 140 are connected to each other by the terminal plates 141 and a plurality of bus bars 151, 152, 153, 154, 155 and 156 provided in a unit case 121, and a plurality of connection portions 151a, 152a, 153a, 154a, 155a and 156a formed on each end of the bus bars 151, 152, 153, 154, 155 and 156 project to the outside of the unit case 121;
a cartridge case 110 into which the unit packs 120a, 120b and 120c are inserted; and
a PCB 160 to which the connection portions 151a, 152a, 153a, 154a, 155a and 156a of the unit packs 120a, 120b and 120c are connected,
wherein the connection portions 151a, 152a, 153a, 154a, 155a and 156a of the unit packs 120a, 120b and 120c inserted into the cartridge case 110 are connected to each other by a plurality of intermediate conductive plates 150 to be electrically connected to a plurality of terminals 162 of the PCB 160 via the intermediate conductive plates 150 or are electrically connected directly to the terminals 162 of the PCB 160.

2. The cell cartridge of claim 1, wherein the terminal plates 141 of the cells 140 are connected to the plate-type bus bars 151, 152, 153, 154, 155 and 156 in a surface contact manner.

3. The cell cartridge of claim 2, wherein the terminal plates 141 of the cells 140 are connected and fastened to an inner side of the unit case 121 together with the bus bars 151, 152, 153, 154, 155 and 156 connected to the terminal plates 141 of the cells 140 in a surface contact manner.

4. The cell cartridge of claim 2, further comprising a pair of plate-type bus bars 157 and 158 connected to the terminal plates 141 of the cells 140 in a surface contact manner such that the terminal plates 141 of the cells 140 are interposed between the bus bars 151, 152, 153, 154, 155, 156, 157 and 158 disposed on the top and bottom of the terminal plates 141 of the cells 140,
wherein the terminal plates 141 of the cells 140 are connected and fastened to an inner side of the unit case 121 together with the bus bars 151, 152, 153, 154, 155, 156, 157 and 158 disposed on the top and bottom of the terminal plates 141 of the cells 140.

5. The cell cartridge of claim 1 or 4, wherein the cells 140 are connected in parallel via the terminal plates 141 and the bus bars 151, 152, 153, 154, 155, 156, 157 and 158 in each of the unit packs 120a, 120b and 120c.

6. The cell cartridge of claim 5, wherein the cells 140 in each of the unit packs 120a, 120b and 120c are disposed parallel to each other in the unit case 121 such that the terminal plates 141 provided on positive (+) terminals of the cells 140 are connected to the bus bars 151, 153, 155 and 155 having a positive (+) polarity and the terminal plates 141 provided on negative (-) terminals of the cells 140 are connected to the bus bars 152, 154, 156 and 158 having a negative (-) polarity.

7. The cell cartridge of claim 6, wherein the connection portions 151a, 152a, 153a, 154a, 155a and 156a integrally formed on the positive (+) bus bars 151, 153 and 155 and the negative (-) bus bars 152, 154 and 156, respectively, project to the outside of the unit case 121 such that each of the unit packs 120a, 120b and 120c comprises a total of two connection portions having the positive (+) and negative (-) polarities, respectively.

8. The cell cartridge of claim 6, wherein the unit packs 120a, 120b and 120c are connected in series or parallel by the intermediate conductive plates 150 connected to the connection portions 152a, 153a, 154a and 155a.

9. The cell cartridge of claim 8, wherein, when the unit packs 120a, 120b and 120c are connected in series, the intermediate conductive plates 150 connect between the connection portions 152a, 153a, 154a and 155a having opposite polarities between adjacent unit packs 120a, 120b and 120c.

10. The cell cartridge of claim 8, wherein, when the unit packs 120a, 120b and 120c are connected in parallel, the intermediate conductive plates 150 connect between the connection portions 152a, 153a, 154a and 155a having the same polarity between adjacent unit packs 120a, 120b and 120c.

11. The cell cartridge of claim 1 or 8, wherein the intermediate conductive plates 150 are connected and fastened to the connection portions 152a, 153a, 154a and 155a in a surface contact manner.

12. The cell cartridge of claim 1 or 4, wherein the bus bars 151, 152, 153, 154, 155, 156, 157 and 158 comprises insertion holes 159a and 159c into which projecting structures formed on an inner side of the unit case 121 are inserted such that the bus bars 151, 152, 153, 154, 155, 156, 157 and 158 are connected and fastened to the unit case 121.

13. The cell cartridge of claim 11, wherein the unit case 121 comprise an upper case 122 and a lower case 123, which are fastened together by screws 124, and
wherein the screws 124 are fastened to fastening holes 123b formed on fastening portions 123a as the projecting structures such that the bus bars 151, 152, 153, 154, 155, 156, 157 and 158 are connected and fastened to the unit case 121 by the connection portions 123a.

14. The cell cartridge of claim 1, wherein the cartridge case 110 comprises a plurality of vent holes for discharging heat dissipated from the unit packs 120a, 120b and 120c to the outside and preventing the temperature of the unit packs 120a, 120b and 120c from rising.

15. The cell cartridge of claim 1, wherein the unit packs 120a, 120b and 120c have a rectangular parallelepiped shape, respectively, and are inserted into the cartridge case 110 in a stacked manner.

16. The cell cartridge of claim 1 or 14, wherein the unit packs 120a, 120b and 120c are connected and fastened to the cartridge case 110 by screws 117, and
wherein the screws 117 are fastened to fastening holes 125b formed on fastening portions 125a projecting from the outer surface of the unit packs 120a, 120b and 120c such that there is a gap between the outer surface of the unit packs 120a, 120b and 120c, other than the fastening portions 125a, and the inner side of the cartridge case 110.

17. The cell cartridge of claim 1 or 14, wherein the cartridge case 110 comprises a plurality of spacers 118 projecting from the inner side of the cartridge case 110 and interposed between the unit packs 120a, 120b and 120c such that the unit packs 120a, 120b and 120c are spaced from each other.

18. The cell cartridge of claim 1, wherein the unit case 121 comprises a plurality of receiving portions 126 formed on the inner side of the unit case 121 to fix the positions of the cells 140 received in the unit case 121 and to space the cells 140 from each other, thereby radiating heat.

19. The cell cartridge of claim 17, wherein the receiving portions 126 are provided in the form of a rib projecting from the inner side of the unit case 121 such that the inner side of the unit case 121 and the sides of the cells 140 are spaced from each other.

20. The cell cartridge of claim 1, wherein the unit case 121 comprises a plurality of vent holes for preventing temperature rise.

21. The cell cartridge of claim 19, wherein the cells 140 are disposed parallel to each other in the unit case 121, and
wherein the unit case 121 comprises a plurality of vent holes 127 formed in a direction parallel to the longitudinal direction of the cells 140 as the vent holes.

22. The cell cartridge of claim 19, wherein the cells 140 are disposed parallel to each other in the unit case 121, and
wherein the vent holes are formed in the width direction of the cells 140 to meet the centers of the cells 140.

23. The cell cartridge of claim 1, wherein the terminal plates 141 are formed of one selected from the group consisting of nickel, silver, copper, gold, aluminum, magnesium, and sodium.

24. The cell cartridge of claim 1, wherein each of the unit packs 120a, 120b and 120c comprises a guide plate for preventing misassembly formed in a predetermined position of each of the unit packs 120a, 120b and 120c,
wherein the PCB 160 comprises a plurality of guide slits 161, into which the guide plates 128 of the unit packs 120a, 120b and 120c are inserted, the guide slits 161 being formed in predetermined positions of the PCB 160.

25. The cell cartridge of claim 1, wherein the cell 140 is one selected from the group consisting of a lithium ion (Li-ion) cell, a Li-ion polymer cell, a nickel-cadmium (Ni-Cd) cell, a nickel-metal hydride (Ni-MH) cell, and a lead-acid cell.

26. A cartridge-combined electricity storage device comprising a plurality of unit pack-combined cell cartridges 100 of any one of claims 1 to 25, which are received in an outer case 2 and connected together to form a single system.

27. The electricity storage device of claim 26, wherein the unit pack-combined cell cartridges 100 accommodated in the outer case 2 are electrically connected together in a manner that the connection portions 151a and 156a are connected by cables, bus bars, or connectors, thereby forming a single system.

28. The electricity storage device of claim 26 or 27, wherein the unit pack-combined cell cartridges 100 are connected in series, in parallel, or in a combination of series and parallel in the outer case 2, thereby forming a single system.

29. The electricity storage device of claim 27, wherein the outer case 2 comprises a connector formed on an inner side of the outer case 2, to which the connection portions 151a and 156a of the unit pack-combined cell cartridge 100 are connected, such that the connection portions 151a and 156a are automatically connected to the connector when the cell cartridge 100 is accommodated in the outer case 2, thereby forming a single system.

30. The electricity storage device of claim 26, the outer case 2 comprises a plurality of vent holes 3 for preventing temperature rise.
